# EUROPÄISCHE PATENTSCHRIFT

(11) **EP 0 547 566 B1**
(45) Veröffentlichungstag und Bekanntmachung des Hinweises auf die Patenterteilung: **15.05.1996**
(21) Anmeldenummer: 92121344.3
(22) Anmeldetag: 15.12.1992
(51) Int. Cl.: F02B 33/44, F02D 9/02

(54) **Verfahren zur Luftzufuhr in die Brennkammer eines Verbrennungsmotors der Kolbenbauart in zwei Phasen**
Method of controlling the air admission in the combustion chamber for an internal combustion engine of a piston type in two phases
Procédé pour contrôler l'admission d'air dans la chambre de combustion d'un moteur à combustion interne de type des pistons en deux phases

(30) Priorität: 16.12.1991 DE 4141482
(43) Veröffentlichungstag der Anmeldung: 23.06.1993
(73) Patentinhaber: Schatz, Oskar, Dr.-Ing., D-82131 Gauting (DE)
(72) Erfinder: Schatz, Oskar, Dr.-Ing., D-82131 Gauting (DE)
(74) Vertreter: Dipl.-Ing. H. Hauck, Dipl.-Ing. E. Graalfs, Dipl.-Ing. W. Wehnert, Dr.-Ing. W. Döring

(56) Entgegenhaltungen:
- EP-A- 0 105 509
- EP-A- 0 419 743
- DE-A- 2 423 576
- DE-A- 3 737 824

## Beschreibung

Die Erfindung betrifft ein Verfahren zur Brenngaszufuhr in die Brennkammer eines Verbrennungsmotors der Kolbenbauart in zwei Phasen nach dem Oberbegriff des Patentanspruchs 1.

Wenn in der Beschreibung von Luftzufuhr die Rede ist, so soll hierunter nicht nur die Zufuhr reiner Luft, sondern auch die Zufuhr eines Kraftstoff-Luft-Gemischs oder eines anderen Brenngases wie z.B. Wasserstoff zu verstehen sein.

Bei Verbrennungsmotoren ist es bekannt, beim Kaltstart und bei anderen Betriebszuständen mit Temperaturdefizit die Temperatur im Brennraum zu erhöhen, um u.a. eine frühzeitige Zündung des Motors und eine Senkung der Emissions- und Verbrauchswerte zu erreichen.

Durch die erhöhte Temperatur und die damit verbundene schnellere Verdampfung des Kraftstoffs wird auch die Gemischaufbereitung verbessert.

Eine bekannte Maßnahme stellt die Brennluftheizung dar, bei der die Brennluft in einem Wärmetauscher aufgeheizt wird, bevor sie in den Motorzylinder einströmt. Auf dem von der aufgeheizten Luft bis in den Zylinder zurückgelegten Weg geht viel Wärme verloren. Bei der Aufheizung dehnt sich die Luft aus, d.h. die Luftmenge im Motor ist umso geringer, je größer die Aufheizung ist, so daß z.B. beim Dieselmotor das erforderliche Drehmoment nicht abgegeben werden kann und Probleme beim Kaltstart und Warmlauf entstehen. Wegen der langen Wege spricht diese Heizung relativ spät an. Da im CVS-Test die Hauptemission wegen einer zu diesem Zeitpunkt vorgesehenen Lastspitze bereits nach 20 sec auftritt, wird die beschriebene Art der Brennluftheizung zu spät wirksam und müßte während dieser Lastspitze bei vielen Motoren abgeschaltet werden, um eine ausreichende Luftmenge fördern zu können. Außerdem weist die Brennluftheizung einen relativ hohen Energiebedarf auf.

Es ist deshalb erwünscht, die zur abgasarmen und wirtschaftlichen Verbrennung in der Brennkammer erforderlichen Temperaturen im Bedarfszeitpunkt in der Brennkammer selbst zu erzeugen, d.h. die Begrenzungsfläche der Brennkammer und die Luft bzw. das Kraftstoff-Luft-Gemisch zu Beginn der Verdichtung durch den Kolben auf eine möglichst hohe Temperatur zu bringen und außerdem sicherzustellen, daß bei Lastspitzen ausreichende Luftmengen gefördert werden.

Es ist an sich schon bekannt, durch eine mechanische Impulsladung, wie sie in der DE-OS 38 24 133.1 beschrieben ist, unmittelbar vor der motorischen Verdichtung in der Brennkammer Wärme zu erzeugen, wobei dort allerdings auch das Saugrohr aufgeheizt wird und diese Aufheizung mit einer hohen Verdichtung der Ladeluft, d.h. mit einem hohen Luftdurchsatz verknüpft ist.

Für einen Betrieb des Motors mit hohen Lufttemperaturen bei allen Betriebszuständen mit Wärmedefizit, insbesondere auch bei niedrigem Luftbedarf, z.B. beim Leerlauf von Ottomotoren, ist diese bekannte Verfahrensweise nicht geeignet.

Ein Verfahren der eingangs angegebenen Gattung ist aus der DE-A-3 737 824 bekannt. Es handelt sich hierbei um ein Verfahren zum Aufladen des Verbrennungsmotors, bei dem die Luftzufuhr zum Zylinder beim Saughub des Kolbens durch ein Zusatzventil während einer bestimmten Zeitspanne unterbrochen wird. Als Folge entsteht ein erhöhter Unterdruck im Zylinder. Wird nach dieser Zeitspanne das Zusatzventil wieder geöffnet, strömt die Luft aufgrund des hohen Unterdrucks im Zylinder mit erhöhter Geschwindigkeit in den Zylinder. Dort wird die Luft abgebremst, was zu einer entsprechenden Druckerhöhung führt. Der Motor wird "aufgeladen". - Bei dem vorbekannten Aufladeverfahren wird die Schließdauer des Zusatzventils auf den Schließzeitpunkt des Einlaßventils so abgestimmt, daß sich das Maximum der Druckerhöhung unmittelbar vor dem Einlaßschluß einstellt. Im Idealfall kommt es hierbei zu einer adiabatischen Druckerhöhung im Zylinder, so daß die Druckerhöhung von einer - beim Aufladevorgang an sich unerwünschten - (kleinen) Temperaturerhöhung begleitet ist. Die Luft erreicht hierbei im Höchstfall die sogenannte adiabatische Endtemperatur. - Bei dem vorbekannten Aufladeverfahren entspricht somit die vom Kolben geleistete Arbeit (Kolbenarbeit) der Förderenergie (zum Fördern der Luft in die Brennkammer) plus der Verdichtungsarbeit (zum Verdichten der Luft in der Brennkammer), wobei lediglich ein kleiner Teil der Kolbenarbeit in thermische Energie der Luft umgewandelt wird.

Aufgabe der Erfindung ist es, ein Verfahren zu schaffen, durch das im Bedarfsfall auf wirtschaftliche Weise bei allen Betriebszuständen und sowohl bei niedrigem wie auch bei hohem Brenngasbedarf eine kurzfristig wirksame, effiziente Aufheizung des Inhalts und der Begrenzungsflächen der Brennkammer auf möglichst hohe Temperaturen ermöglicht wird.

Ein weiteres Ziel der Erfindung ist es, die Aufbereitung des Kraftstoff-Luft-Gemischs zu verbessern.

Die erfindungsgemäße Lösung dieser Aufgabe ist in Anspruch 1 definiert.

Die Abstimmung wird bei Wärmebedarf so getroffen, daß die sich in der zweiten Phase in kinetische Energie der einströmenden Luft verwandelnde Kolbenarbeit den für eine eventuelle Vordichtung erforderlichen Betrag wesentlich übersteigt, so daß sich die Differenz in Wärme umwandelt. Es ist dabei eine Temperatursteigerung um mindestens 200 °C bei gleichzeitiger Erhöhung des Luftdurchsatzes möglich, was wirtschaftlich durch kein bekanntes Verfahren erreichbar ist. Dabei stellt sich die Dichte bzw. die insgesamt einströmende Luftmenge nicht wie bei dem eingangs erwähnten, bekennten Ladeverfahren aufgrund der kinetischen Energie automatisch ein, vielmehr wird die Luftmenge willkürlich durch die Wahl der Einströmdauer auf das gewünschte, der augenblicklichen Belastung des Motors angepaßte Maß begrenzt, so daß sich die überschußenergie in Wärme verwandeln muß. Dadurch ist die Regelung der Temperaturerhöhung unabhängig von der Luftmenge, wobei die Luftmenge auch niedriger sein kann als sich bei unbehinderter Einströmung ergeben würde.

Beim Kaltstart ergibt sich eine durch die hohe Lufterwärmung ausgelöste positive Rückkopplung zwischen der Wandtemperatur der Brennkammer während des Verdichtungshubs und der vom Kolben aufzubringenden Verdichtungsarbeit. Eine hohe Wandtemperatur bewirkt eine hohe Verdichtungsarbeit, diese bewirkt höhere Brennkammertemperaturen und diese wieder höhere Wandtemperaturen für das nächse Arbeitsspiel, Dadurch wird eine frühzeitige Zündung garantiert, der elektrische Stromverbrauch des Anlassermotors wird minimiert und die Aufheizung der Brennkammer wird von Zündung zu Zündung exponential beschleunigt.

Durch Anwendung des erfindungsgemäßen Vefahrens wird ein Magerbetrieb vom Start weg ermöglicht.

Es sind heute drei Betriebsarten von Verbrennungsmotoren bekannt, welche sowohl Vergasermotoren als auch Motoren mit Kraftstoffeinspritzung umfassen, nämlich Betrieb ohne Abgaskatalysator, Betrieb mit ungeregeltem Abgaskatalysator und Betrieb mit geregeltem Abgaskatalysator.

Beim Betrieb mit geregeltem Abgaskatalysator ist außer der Verwendung eines Vergasers oder einer Kraftstoffeinspritzung mit Luftmengenmesser eine Sauerstoffsonde im Abgasstrom erforderlich, die das augenblickliche Luft-Kraftstoff-Verhältniss mit großer Präzision anzeigt und dadurch die genaue Regelung des dem augenblicklichen Betriebszustand entsprechenden optimalen Luft-Kraftstoff-Verhältnisses ermöglicht.

Bein Betrieb mit geregeltem Abgaskatalysator ist der Vergaser oder Luftmengenmesser lediglich erforderlich, um einen Betrieb des Motors im kalten Zustand zu ermöglichen, bei dem ein Luftüberschuß im Abgas noch nicht zur Verfügung steht, weil in diesem Betriebszustand mit Kraftstoffüberschuß gefahren werden muß. Wegen des vom Start weg möglichen Magerbetriebs kann bei allen drei vorstehend gennanten Betriebsarten auf Vergaser bzw. Luftmengenmesser verzichtet werden.

Durch die hohe Luftgeschwindigkeit und -temperatur ergibt sich eine besonders gute Brennstoffaufbereitung. Insbesondere eignet sich das Verfahren auch für die Anwendung alternativer Kraftstoffe, vor allem auch solcher mit hoher Verdampfungswärme, wie Alkohole.

Bei Ottomotoren ist generell der Vorteil wichtig, daß die erste Lastspitze im CVS-Test nach 2 sec Motorbetrieb trotz Erhaltung der vollen Leistungsfähigkeit des Motors mit hoher Lufterwärmung gefahren werden kann.

Bei Dieselmotoren ist neben der Verbesserung der Kaltstartfähigkeit besonders wichtig, daß beim Warmlauf wegen der durch die Temperaturerhöhung bedingten besseren Verbrennung und der möglichen höheren Luftmenge das Drehmoment des Motors wesentlich steigt. Dadurch wird ein wesentlicher Nachteil des Dieselmotors behoben, der Motor ist drehfreudiger und die Fahrweise kann dem vom Ottomotor vorgegebenen Standard angepaßt werden. Hierdurch wird die Kundenakzeptanz steigen, was wegen des niedrigen Kraftstoffverbrauchs vorlkswirtschaftlich bedeutsam ist.

Bei Anwendung des Verfahren kann die Motorverdichtung bei Otto- und Dieselmotoren reduziert werden und es wird bei Otto- und Dieselmotoren ein Betrieb mit effektiver, variabler Verdichtung möglich. Dadurch kann der Kraftstoffverbrauch optimiert werden.

Solange Wärmebedarf besteht, wird die Abstimmung so getroffen, daß die Kolbenarbeit nicht nur die gewünschte Luftmenge fördert, sondern daß ein überschuß an kinetischer Energie vorhanden ist, der sich in Wärme umwandelt. Mit zunehmender Annäherung an die Betriebstemperatur wird die Abstimmung so geändert, daß die Freisetzung vom Wärme über das für die Verdichtung erforderliche Maß abnimmt und schließlich beendet wird. Die der Durchführung des Verfahrens dienenden Einrichtungen können bei Bedarf auch zur Änderung der Verdichtung bzw. zur dynamischen Aufladung eingesetzt werden.

Die Unterdruckarbeit wird beim Start zunächst von der den Anlassermotor und über diesen den Verbrennungsmotor treibenden elektrischen Batterie aufgebracht. Nach der Zündung des Verbrennungsmotors bringt dieser die sog. Ladungswechselarbeit selbst auf. Unter Berücksichtigung der durch das erfindungsgemäße Verfahren verbesserten Kaltstartfähigkeit des Verbrennungsmotors ist die von der elektrischen Batterie aufzubringende Arbeit geringer als bei konventionellen Startverfahren, weil die höhere Initialleistung durch Verkürzung der Einschaltdauer mehr als kompensiert wird. Außerdem kann der erfindungsgemäße Betrieb bei leistungsschwacher elektrischer Batterie auch verzögert, nämlich nach Zündbeginn einsetzen.

Durch die bereits beim ersten Saughub wirkende höhere Temperatur der Luft werden die Wände der Brennkammer von innen aufgeheizt, der Polytropenexponent bei der anschließenden Motorverdichtung steigt und damit die Temperaturerhöhung durch die Motorverdichtung. Außerdem beginnt die Motorverdichtung auf einem höheren Temperaturniveau.

Die eingangs bereits erwähnten, bekannten Verfahren der Wärmezufuhr z.B. durch Brennluftheizung oder der Impulsladung weisen beide eine für die der Erfindung zugrundeliegende Aufgabe unerwünschte Wirkung auf, nämlich eine Koppelung zwischen Temperaturerhöhung und Luftmengenerhöhung. Bei der Brennluftheizung mit der Zielrichtung Temperaturerhöhung nimmt mit der Temperaturerhöhung die in die Brennkammer eingebrachte Luftmenge ab. Bei der Impulsladung mit der Zielrichtung Luftmengensteigerung nimmt mit der Luftmengensteigerung auch die Temperatur zu. Demgegenüber hat das erfindungsgemäße verfahren den Vorteil, daß eine Entkoppelung von Luftmengenänderung und Temperaturänderung besteht und daß im Vergleich zum unbehinderten Einströmen der Luft die Luftmenge sowohl erhöht als auch abgesenkt werden kann.

Ein wichtiger Vorteil der Erfindung besteht in einer verbesserten Gemischaufbereitung. Zum einen wird durch die höhere Temperatur im Brennraum die Verdampfung des Kraftstoffs beschleunigt und seine Zündwilligkeit mit der Luft erhöht. Zum anderen kommt es wegen der hohen Einströmgeschwindigkeit der Luft während der zweiten Phase zu einer starken Verwirbelung im Brennraum und somit einer guten Vermischung von Kraftstoff und Luft.

In weiterer Ausgestaltung der Erfindung ist vorgesehen, daß Kraftstoff in der Weise zugeführt wird, daß er zur Verbesserung der Gemischaufbereitung unter den Einfluß mit erhöhter Geschwindigkeit strömender Luft gelangt.

Dies kann in der Weise erfolgen, daß der Kraftstoff direkt in die mit erhöhter Geschwindigkeit strömende Luft zugeführt wird. Eine andere Möglichkeit besteht darin, daß der Kraftstoff stromauf vom Ort der Behinderung und/oder vor dem Ende der Behinderung zugeführt wird. Die Kraftstoffzufuhr kann hierbei wowohl über ein Einspritzsystem als auch mit Hilfe eines Vergasers erfolgen.

Die erhöhte Strömungsgeschwindigkeit der Luft während der zweiten Phase führt zu einer stärkeren Turbulenz der Strömung und einer entsprechenden Verringerung der Grenzschichtdicke. Dies verbessert die Durchmischung von Kraftstoff und Luft und verringert die Gefahr einer Benetzung der Saugrohrwände mit Kraftstoff. Die starke Turbulenz der Strömung hat außerdem eine bessere Zerstäubung des Kraftstoffs zur Folge. Ferner ergibt sich aufgrund der Turbulenz und der damit verbundenen Verringerung der Grenzschichtdicke eine bessere Verdampfung des Kraftstoffs, was durch die aus der dynamischen Aufladung resultierende Temperaturerhöhung weiter begünstigt wird. Die Folge ist eine erheblich verbesserte Gemischaufbereitung, die sich sowohl beim Otto- wie auch beim Diesel-Motor ausnutzen läßt.

In weiterer Ausgestaltung der Erfindung ist vorgesehen, daß die Abstimmung von Ausmaß, Beginn und Ende der Behinderung in der Weise erfolgt, daß zumindest zu Beginn der zweiten Phase ein überkritisches Druckverhältnis zwischen dem Druck stromauf vom Ort der Behinderung und dem Druck in der Brennkammer besteht.

Das überkritische Druckverhältnis zwischen Zylinder und Ansaugrohr und die hieraus resultierende Überschallgeschwindigkeit führen zu Verdichtungsstößen, die die Temperatur der Verbrennungsluft lokal auf sehr große Werte erhöhen. Hieraus resultiert in Betriebszuständen des Verbrennungsmotors, in denen ein Wärmedefizit vorliegt, eine weitere deutliche Verbesserung der Verbrennungsbedingungen. Darüberhinaus ist eine weitere Verbesserung der Gemischaufbereitung zu erwarten.

Eine vorteilhafte Ausgestaltung besteht bei Ottomotoren darin, daß die Behinderung der Luftzufuhr stromauf vom Einlaßventil der Brennkammer erfolgt, wodurch die Saugrohrwände unmittelbar vor der Brennkammer erwärmt werden und dort auftreffender Kraftstoff alsbald abdampft, wodurch die HC-Emissionen reduziert werden.

Eine weitere zweckmäßige Ausgestaltung besteht darin, daß beim Kaltstart die Behinderung der Luftzufuhr um mindstens ein Zündspiel verzögert wird. Dadurch wird die elektrische Leistungsspitze reduziert.

Eine andere vorteilhafte Ausgestaltung ist es, daß beim Kaltstart die Kraftstoffeinspritzung um mindestens ein Zündspiel verzögert wird, um Zündaussetzern vorzubeugen, die hohe Emissionsspitzen verursachen.

Nach einer bevorzugten Ausführungsform erfolgt die Regelung von Ausmaß und Phasenlage der Behinderung und des Endes der Luftzufuhr in Abhängigkeit von Drehzahl, Betriebstemperatur und Lastzustand des Motors. Nach dem heutigen Stand der Meß- und Regeltechnik kann eine solche Regelung unter Einschaltung eines Rechners erfolgen. Man wird bei der Regelstrategie eines nach dem erfindungsgemäßen Verfahren betriebenen Motors vorteilhaft Luftmenge und Lufttemperatur differenziert betrachten. Die Luftmenge wird von der augenblicklichen Lastsituation des Motors vorgegeben, während die Lufttemperaturregelung sich hauptsächlich an der sog. Betriebstemperatur orientieren muß, die eine vom Stand der Technik noch nicht voll gewürdigte Führungsgröße darstellt. In Zusammenhang mit dem erfindungsgemäßen Verfahren muß die Lufttemperaturreglung insbesondere auf die Beseitigung der Kaltstartprobleme bzw. auf Motorsituationen mit Wärmedefizit abgestimmt sein.

Man kann bei der Anwendung des erfindungsgemäßen Verfahrens bei Ottomotoren für jedes Zündspiel Luftmenge und Lufttemperatur vorgeben und hieraus Ausmaß und Phasenlage der Behinderung und das Ende der Luftzufuhr ermitteln. Dies gilt sinngemäß auch bei der Anwendung des erfindungsgemäßen Verfahrens auf den Betrieb von Dieselmotoren, weil das erfindungsgemäße Verfahren eine Korrektur der Luftmenge nach unten und oben ermöglicht, so daß der Motor stets bei einem optimalen Mengenverhältnis Luft/Kraftstoff betrieben werden kann.

Aus Gesamtmenge und gewünschter Temperturerhöhung der Luft wird die erforderliche Energie ermittelt, die sowohl der kinetischen Energie als auch der Unterdruckenergie entspricht. Dann wird die mindestens erforderliche zweite Luftmenge ermittelt, die in der zweiten Phase einströmen muß, wobei gegebenenfalls die kritische Einströmgeschwindigkeit das Höchstmaß an massenspezifischer kinetischer Energie bestimmt, sofern die Einströmgeschwindigkeit im unterkritischen Bereich bleibt. Dann wird aus den verfügbaren Strömungsquerschnitten die Mindestdauer für die Einströmung dieser Luftmenge ermittelt, wodurch der späteste Zeitpunkt für den Einströmbeginn in der zweiten Phase festliegt. In einem folgenden Iterationsprozeß muß dann festgestellt werden, ob mit den zuvor gemachten Annahmen für den Einströmbeginn und eine etwaige Massenaufteilung die erforderliche Unterdruckarbeit realisierbar ist, und die Parameter werden optimiert.

Da bei Anwendung des erfindungsgemäßen Verfahrens vom Start weg ein Magerbetrieb des Motors möglich ist, besteht eine vorteilhafte Ausgestaltung darin, daß die Motorregelung - worunter hier und in dieser Beschreibung insgesamt die Regelung des Luft-Kraftstoff-Verhältnisses verstanden wird - als Magerreglung mit Hilfe einer im Abgasstrom angeordneten Sauerstoffsonde erfolgt. Die Sauerstoffsonde ermittelt den Luftüberschuß und hält ihn z.B. bei 20 %. Dadurch kann der aufwendige Luftmengenmesser oder Vergaser entfallen.

Zwar entfällt aufgrund der sofortigen Anhebung der Brennkammertemperatur auf einen für den Magerbetrieb geeigneten Wert die übliche Warmlaufphase, doch läßt sich eine - wenn auch geringe - Verzögerung bis zum Wirksamwerden der Sauerstoffsonde im Abgasstrom kaum vermeiden.

Es besteht deshalb eine besonders vorteilhafte Ausgestaltung darin, daß für die Startphase das Luft-Kraftstoffverhältnis aufgrund von Erfahrungswerten und allgemeiner Daten über den Luftdurchsatz eingestellt ist.

Eine andere vorteilhafte Ausführungsform besteht darin, daß die Sauerstoffsonde vor dem Start vorgeheizt wird.

Eine andere vorteilhafte Ausführungsform ist es bei Motoren mit zeitweilig sehr hohem Luftbedarf, daß dem mit einer Einrichtung zur zeitweiligen Behinderung der Luftzufuhr versehenen Bereich des Lufteinlaßsystems bei hohem Luftbedarf ein Lader vorgeschaltet wird.

Noch eine weitere vorteilhafte Ausgestaltung besteht darin, daß der Luftmengenstrom vor der Einrichtung zur zeitweiligen Behinderung der Luftzufuhr in Abhängigkeit vom Betriebszustand des Motors beeinflußt wird. Damit kann der Bereich ausgeweitet werden, in dem Temperatur und Luftdurchsatz unabhängig voneinander geregelt werden können. Beispielsweise kann im Leerlauf ohne Erhöhung des Luftdurchsatzes die Temperatur in der Brennkammer angehoben werden.

Noch eine andere zweckmäßige Ausgestaltung ist es, daß bei Kraftfahrzeugmotoren die Kraftstoffmenge durch das Fahrpedal beeinflußt wird und das Luft-Kraftstoff-Verhältnis aufgrund der allgemeinen Betriebsdaten vorgegeben wird und durch die Messung des Sauerstoffüberschusses im Abgas durch die Sauerstoffsonde geregelt wird.

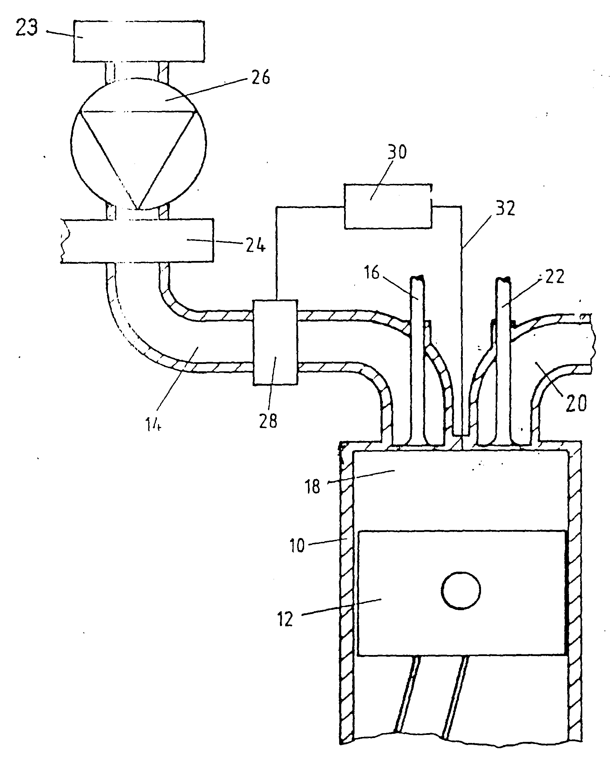

Anhand eines in der Zeichnung dargestellten Ausführungsbeispiels eines zur Durchführung der Erfindung geeigneten Motorzylinders wird die Erfindung näher erläutert.

Die Zeichnung zeigt schematisch den Ein- und Auslaßbereich eines Verbrennungsmotors der Kolbenbauart mit einem stromauf vom Einlaßventil angeordneten Zusatzventil und einem Lader.

In der Zeichnung ist nur ein Zylinder 10 eines Verbrennungsmotors dargestellt, der einen Motorkolben 12 enthält. Ein Einlaßkanal 14 mündet über ein Einlaßventil 16 in die Brennkammer 18 innerhalb des Zylinders 10. Eine Abgasleitung 20 ist über ein Auslaßventil 22 angeschlossen.

Der Einlaßkanal wird über einen Luftfilter 23 und einen Luftverteiler 24 mit Luft versorgt, die vom Kolben 12 nach öffnung des Einlaßventils 16 angesaugt wird. Alternativ kann dem Luftfilter 23 eine Ladevorrichtung 26 zur Verdichtung der Ladung nachgeschaltet sein. Gegebenenfalls kann in die über den Luftfilter 23 eingeströmte Luft auch Kraftstoff eingebracht werden, so daß über das Einlaßventil 16 statt Luft ein Kraftstoff-Luft-Gemisch in den Verbrennungsraum eingebracht: wird.

Stromauf vom Einlaßventil 16 ist im Einlaßkanal 14 ein Zusatzventil 28 angeordnet, das geeignet ist, den Einlaßkanal 14 ganz oder teilweise zu sperren. Diesem Zusatzventil 28 ist eine Steuereinheit zugeordnet, die nur schematisch dargestellt und mit 30 bezeichnet ist. Sie erhält über eine Leitung 32 Informationen über den Betriebszustand des Motors und gegebenenfalls, z.B. abgeleitet vom Fahrpedal, Informationen über den Fahrwunsch des Fahrers eines mit dem Motor ausgestatten Kraftfahrzeugs.

Mit Hilfe des Zusatzventils 28 läßt sich die Luftzufuhr in zwei Phasen unterteilen.

Im Ruhezustand ist das Zusatzventil 28 beispielsweise geöffnet, so daß Ladung in den Zylinder 10 eintreten kann. Abhängig von den der Steuereinheit 30 zugeleiteten Daten wird das Zusatzventil 20 gegebenenfalls zeitweilig geschlossen und beendet dadurch eine etwaige Luftzufuhr in die Brennkammer 18 in einer ersten Phase. Diese Luftzufuhr in der ersten Phase kann aber auch vollständig unterbleiben oder es kann die Luftzufuhr während der ersten Phase durch das Zusatzventil 28 gedrosselt sein.

Während der Schließphase oder Drosselphase des Zusatzventils 28 wird der Druck in der Brennkammer 18 durch die Kolbenarbeit abgesenkt. Diese Druckabsenkung in der Brennkammer 18 verursacht eine gegenüber der Strömungsgeschwindigkeit der Ladung vor der Schließphase des Zusatzventils 28 erhöhte Geschwindigkeit der nach Öffnung des Zusatzventils 28 in einer zweiten Phase in die Brennkammer 18 einströmenden Ladung, deren kinetische Energie sich beim Abbremsen des Ladungsstroms in Druck und damit in Verdichtung umwandelt. Dabei entsteht unmittelbar in der Brennkammer 18 Wärme. Durch entsprechende Bemessung der Schließdauer und Phasenlage des Zusatzventils 28 wird der Überschuß an kinetischer Energie bestimmt, der durch Umwandlung in Wärme die Temperatur im Brennraum auf das gewünschte Niveau anhebt.

Um unabhängig von der gewünschten Temperaturerhöhung den Luftdurchsatz entsprechend dem augenblicklichen Bedarf des Motors zu bemessen, wird die Einströmdauer während der zweiten Phase beeinflußt und gegebenenfalls durch erneutes Schliessen des Zusatzventils 28 vor dem Schließen des Einlaßventils 16 beendet. Hierbei wird gegebenenfalls eine in der ersten Phase eingeströmte Luftmenge berücksichtigt.

Da sich vom Start weg die Brennkammertemperatur auf einem Niveau halten läßt, das einen Magerbetrieb ermöglicht, kann der übliche Luftmengenmesser oder Vergaser zur Regelung des Luft-Kraftstoff-Verhältnisses entfallen und die Regelung in Abhängigkeit vom Meßergebnis der kostengünstigeren Sauerstoffsonde erfolgen. Dadurch ergibt sich nicht nur eine Kostensenkung des Systems zumindest beim Betrieb mit geregeltem Abgaskatalysator, sondern bei allen oben genannten Betriebsarten auch eine Reduzierung der Abgasemissionen beim Kaltstart und während des Warmlaufs, sowie eine entsprechende Einsparung im Kraftstoffverbrauch.

## Patentansprüche

1. Verfahren zur Brenngaszufuhr in die Brennkammer eines Verbrennungsmotors der Kolbenbauart in zwei Phasen, wobei zumindest gegen Ende der ersten Phase die Brenngaszufuhr in die Brennkammer behinderbar ist und wobei zumindest zu Beginn der zweiten Phase, die mit der einsetzenden Verdichtung der Ladung durch den der Brennkammer zugeordneten Kolben endet, die Behinderung der Brenngaszufuhr aufgehoben wird, wobei die Kolbenarbeit die zur Füllung der Brennkammer mit der gewünschten Brenngasmenge erforderliche Förder- und Verdichtungsenergie liefert,
dadurch gekennzeichnet, daß
- das Ausmaß der Behinderung,
- der Beginn der Behinderung,
- das Ende der Behinderung und
- das Ende der Brenngaszufuhr
so aufeinander abgestimmt sind, daß die sich ergebende Kolbenarbeit zusätzlich zu der Förder- und Verdichtungsenergie Wärmeenergie für eine gewünschte Temperaturerhöhung des Brenngases über die adiabate Verdichtungsendtemperatur hinaus liefert.

2. Verfahren nach Anspruch 1, dadurch gekennzeichnet, daß die Behinderung der Brenngaszufuhr stromauf von einem Einlaßventil der Brennkammer erfolgt.

3. Verfahren nach Anspruch 1, dadurch gekennzeichnet, daß die Beendigung der Brenngaszufuhr stromauf von einem Einlaßventil der Brennkammer erfolgt.

4. Verfahren nach Anspruch 1, dadurch gekennzeichnet, daß die Behinderung der Brenngaszufuhr durch variable Einlaßventilsteuerung erfolgt.

5. Verfahren nach Anspruch 1, dadurch gekennzeichnet, daß die Beendigung der Brenngaszufuhr durch variable Einlaßventilsteuerung erfolgt.

6. Verfahren nach einem der vorhergehenden Ansprüche, dadurch gekennzeichnet, daß beim Kaltstart die Behinderung der Brenngaszufuhr um mindestens ein Zündspiel verzögert wird.

7. Verfahren nach einem der vorhergehenden Ansprüche, dadurch gekennzeichnet, daß beim Kaltstart Kraftstoffeinspritzung um mindestens ein Zündspiel verzögert wird.

8. Verfahren nach einem der vorhergehenden Ansprüche, dadurch gekennzeichnet, daß die Regelung von Ausmaß und Phasenlage der Behinderung und des Endes der Brenngaszufuhr in Abhängigkeit von Betriebstemperatur, Drehzahl und Lastzustand des Motors erfolgt.

9. Verfahren nach einem der vorhergehenden Ansprüche, dadurch gekennzeichnet, daß für jedes Zündspiel Luftmenge und Lufttemperaturerhöhung vorgegeben und hieraus Ausmaß und Phasenlage der Behinderung und das Ende der Brenngaszufuhr ermittelt werden.

10. Verfahren nach Anspruch 9, dadurch gekennzeichnet, daß die zur Förderung und Temperaturerhöhung der Gesamtluftmenge erforderliche Energie ermittelt wird, der die kinetische Energie bzw. die Unterdruckenergie entsprechen muß, daß dann die mindestens erforderliche zweite Teilmenge ermittelt wird, daß dann ausgehend von den verfügbaren Strömungsquerschnitten die Mindestdauer für die Einströmung der zweiten Teilmenge ermittelt und dadurch der späteste Zeitpunkt für den Einströmbeginn dieser zweiten Teilmenge festgelegt wird, und daß in einem folgenden Iterationsprozeß die zunächst gewählten Werte für Einströmbeginn und eine eventuelle Massenaufteilung entsprechend der erforderlichen Unterdruckarbeit optimiert werden.

11. Verfahren nach einem der vorhergehenden Ansprüche, dadurch gekennzeichnet, daß die Regelung des Luft-Kraftstoff-Verhältnisses als Magerregelung mit Hilfe einer im Abgasstrom angeordneten Sauerstoffsonde erfolgt.

12. Verfahren nach einem der vorhergehenden Ansprüche, dadurch gekennzeichnet, daß bei Motoren mit zeitweilig sehr hohem Luftbedarf dem mit einer Einrichtung zur zeitweiligen Behinderung der Brenngaszufuhr versehenen Bereich des Lufteinlaßsystems bei hohem Luftbedarf ein Lader vorgeschaltet wird.

13. Verfahren nach einem der vorhergehenden Ansprüche, dadurch gekennzeichnet, daß der Luftmengenstrom vor der Einrichtung zur zeitweiligen Behinderung der Brenngaszufuhr in Abhängigkeit vom Betriebszustand des Motors geregelt wird.

14. Verfahren nach Anspruch 11, dadurch gekennzeichnet, daß für die Startphase das Luft-Kraftstoff-Verhältnis aufgrund von Erfahrungswerten und allgemeiner Daten über den Luftdurchsatz eingestellt ist.

15. Verfahren nach Anspruch 11, dadurch gekennzeichnet, daß die Sauerstoffsonde vor dem Start vorgeheizt wird.

16. Verfahren nach einem der Ansprüche 11-15, dadurch gekennzeichnet, daß bei Kraftfahrzeugmotoren die Kraftstoffmenge durch das Fahrpedal beeinflußt wird und das Luft-Kraftstoff-Verhältnis aufgrund der allgemeinen Betriebsdaten vorgegeben wird und durch die Messung des Sauerstoffüberschusses im Abgas durch die Sauerstoffsonde geregelt wird.

17. Verfahren nach einem der vorhergehenden Ansprüche, dadurch gekennzeichnet, daß Kraftstoff in der Weise zugeführt wird, daß er zur Verbesserung der Gemischaufbereitung in der zweiten Phase unter den Einfluß der mit erhöhter Geschwindigkeit strömenden Luft gelangt.

18. Verfahren nach Anspruch 17, dadurch gekennzeichnet, daß der Kraftstoff direkt in die mit erhöhter Geschwindigkeit strömende Luft zugeführt wird.

19. Verfahren nach Anspruch 17, dadurch gekennzeichnet, daß der Kraftstoff stromauf vom Ort der Behinderung und/oder vor dem Ende der Behinderung zugeführt wird.

20. Verfahren nach einem der vorhergehenden Ansprüche, dadurch gekennzeichnet, daß die Abstimmung von Ausmaß, Beginn und Ende der Behinderung in der Weise erfolgt, daß zumindest zu Beginn der zweiten Phase ein überkritisches Druckverhältnis zwischen dem Druck stromauf vom Ort der Behinderung und dem Druck in der Brennkammer besteht.

## Claims

1. A method of supplying a combustible gas into a combustion chamber of an internal combustion engine of the piston type during two phases, the supply of combustible gas into the combustion chamber being restricted at least towards the end of the first phase and restriction of the supply of the combustible gas being terminated at least during the beginning of the second phase which ends when the piston associated with the combustion chamber begins to compress the charge of combustible gas, the piston work providing the feed and compression energy necessary for filling the combustion chamber with the desired amount of combustible gas, characterized in that
- the extent of the restriction,
- the beginning of the restriction,
- the end of the restriction, and
- the end of the combustible gas supply
are matched such that the resultant piston work provides heat energy for a desired increase of the temperature of the combustible gas above the adiabatic compression end temperature additional to the feed and compression energy.

2. A method according to claim 1, characterized in that the restriction of the combustible gas supply occurs upstream of an inlet valve of the combustion chamber.

3. A method according to claim 1, characterized in that the termination of the combustible gas supply occurs upstream of an inlet valve of the combustion chamber.

4. A method according to claim 1, characterized in that the restriction of the combustible gas supply is provided by variable inlet valve control.

5. A method according to claim 1, characterized in that the termination of the combustible gas supply is provided by variable inlet valve control.

6. A method according to any of the preceding claims, characterized in that at cold start the restriction of the combustible gas supply is delayed for at least one ignition cycle.

7. A method according to any of the preceding claims, characterized in that at colt start fuel injection is delayed for at least one ignition cycle.

8. A method according to any of the preceding claims, characterized in that the control of the extent and timing of the restriction and of the end of the combustible gas supply is performed in response to the operative temperature, speed and load conditions of the engine.

9. A method according to any of the preceding claims, characterized in that the amount of air and the increase of air temperature are predetermined for each ignition cycle and the extent and timing of the restriction and the end of the combustible gas supply are determined in response thereto.

10. A method according to claim 9, characterized in that the energy necessary for increasing the temperature of and feeding the total amount of combustible gas is determined, with this energy corresponding to the kinetic energy and, respectively, the suction energy, in that the minimal second partial amount is then determined, in that thereafter the minimum duration of flow of the second partial amount is determined by taking into account the available flow cross-sections thereby to determine the latest time for the second partial amount to begin to flow, and in that the preselected time for the combustible gas to begin to flow into the combustion chamber and a possibly required first partial amount corresponding to said necessary suction work are optimized in a following iteration process.

11. A method according to any of the preceding claims, characterized in that the control of the air fuel ratio is provided by means of an oxygen sensor in the exhaust gas flow so as to provide for lean mixture operation.

12. A method according to any of the preceding claims, characterized in that, in engines requiring excessive amounts of air at certain times, a charger is connected upstream of the area of the air intake system provided with a means for temporarily restricting the combustible gas supply.

13. A method according to any of the preceding claims, characterized in that the combustible gas mass flow rate upstream of the means for temporarily restricting the combustible gas supply is controlled in response to the operative condition of the engine.

14. A method according to claim 11, characterized in that, for the start phase, the air fuel ratio is adjusted in response to experimental data and general data of the air flow rate.

15. A method according to claim 11, characterized in that the oxygen sensor is preheated prior to the starting.

16. A method according to any of claims 11 to 15, characterized in that in automotive engines the amount of fuel is influenced by the driver's pedal and the air fuel ratio is preselected on the basis of general operative data and is controlled by sensing any excess oxygen in the exhaust gas by means of the oxygen sensor.

17. A method according to any of the preceding claims, characterized in that the fuel is supplied such that the fuel comes under the influence of the air flowing at increased velocity for enhancing the conditioning of the fuel air mixture.

18. A method according to claim 17, characterized in that the fuel is supplied directly into the stream of air flowing at increased velocity.

19. A method according to claim 17, characterized in that the fuel is supplied upstream of the location of the restriction and/or prior to the end of the restriction.

20. A method according to any of the preceding claims, characterized in that the matching of the extent, beginning and end of the restriction occurs such that at least during the beginning of the second phase a supersonic pressure ratio between the pressure upstream of the location of restriction and the pressure in the combustion chamber will result.

## Revendications

1. Procédé pour l'admission en deux phases d'un gaz combustible dans la chambre de combustion d'un moteur à combustion interne de type à piston, selon lequel on peut entraver l'admission du gaz combustible dans la chambre de combustion au moins vers la fin de la première phase et, au moins au début de la seconde phase, laquelle se termine par le début de la compression de la charge par le piston associé à la chambre de combustion, l'admission du gaz combustible n'est plus gênée, le travail du piston fournissant l'énergie d'admission et l'énergie de compression nécessaires pour le remplissage de la chambre de combustion avec la quantité de gaz combustible souhaitée,
caractérisé en ce que
- l'importance de l'entrave
- le début de l'entrave
- la fin de l'entrave et
- la fin de l'admission de gaz combustible
sont déterminés l'un en fonction de l'autre de telle sorte que le travail du piston qui en résulte fournisse en plus de l'énergie d'admission et de l'énergie de compression, une énergie thermique pour une augmentation souhaitée de la température du gaz combustible supérieure à la température finale de la compression adiabatique.

2. Procédé selon la revendication 1, caractérisé en ce que l'entrave à l'admission de gaz combustible en amont est commandée par une soupape d'admission de la chambre de combustion.

3. Procédé selon la revendication 1, caractérisé en ce que la fin de l'admission de gaz combustible en amont est commandée par une soupape d'admission de la chambre de combustion.

4. Procédé selon la revendication 1, caractérisé en ce que l'entrave à l'admission de gaz combustible est commandée par une commande variable de la soupape d'admission.

5. Procédé selon la revendication 1, caractérisé en ce que la fin de l'admission de gaz combustible est commandée par une commande variable de la soupape d'admission.

6. Procédé selon l'une quelconque des revendications précédentes, caractérisé en ce que l'entrave de l'admission de gaz combustible est retardée d'au moins un cycle d'allumage lors d'un démarrage à froid.

7. Procédé selon l'une quelconque des revendications précédentes, caractérisé en ce que l'injection de carburant est retardée d'au moins un cycle d'allumage lors d'un démarrage à froid.

8. Procédé selon l'une quelconque des revendications précédentes, caractérisé en ce que le réglage de l'importance et de la position de phase de l'entrave et de la fin de l'admission de gaz combustible dépend de la température de fonctionnement, de la vitesse de rotation et de l'état de charge du moteur.

9. Procédé selon l'une quelconque des revendications précédentes, caractérisé en ce que la quantité d'air et l'augmentation de la température de l'air sont prédéfinies pour chaque cycle d'allumage et qu'à partir de cela sont déterminées l'importance et la position de phase de l'entrave, et la fin de l'admission de gaz combustible.

10. Procédé selon la revendication 9, caractérisé en ce que l'énergie nécessaire pour l'admission et l'augmentation de la température de la quantité totale d'air est déterminée, à cette énergie devant correspondre l'énergie cinétique ou l'énergie de dépression,
en ce qu'au moins la deuxième quantité partielle minimale nécessaire est alors déterminée,
en ce qu'à partir des sections de passage disponibles la durée minimale de l'admission de la deuxième quantité partielle est déterminée et, de ce fait, le moment le plus tardif du début de l'admission de cette deuxième quantité partielle, est défini,
et en ce que, dans un processus d'itération consécutif, les valeurs d'abord choisies pour le début de l'admission et une éventuelle répartition des masses sont optimisées en fonction du travail de dépression nécessaire.

11. Procédé selon l'une quelconque des revendications précédentes, caractérisé en ce que le réglage du rapport air - carburant est exécuté comme un réglage pauvre par l'intermédiaire d'une sonde à oxygène montée dans le conduit de gaz d'échappement.

12. Procédé selon l'une quelconque des revendications précédentes, caractérisé en ce que, dans les moteurs avec une consommation d'air momentanée très élevée, un chargeur est monté en amont de la zone du système d'admission d'air muni d'un dispositif pour entraver momentanément l'admission du gaz combustible.

13. Procédé selon l'une quelconque des revendications précédentes, caractérisé en ce que l'écoulement d'air avant le dispositif destiné à entraver momentanément l'admission du gaz combustible est réglé en fonction de l'état d'exploitation du moteur.

14. Procédé selon la revendication 11, caractérisé en ce que, pour la phase de démarrage, le rapport air - carburant est régulé en fonction du débit de l'air, en se basant sur des valeurs empiriques et des données générales.

15. Procédé selon la revendication 11, caractérisé en ce que la sonde à oxygène est préchauffée avant le démarrage.

16. Procédé selon l'une quelconque des revendications 11 à 15, caractérisé en ce que, dans les moteurs d'automobiles, la quantité de carburant est influencée par la pédale d'accélérateur, et le rapport air - carburant est défini en se basant sur les données d'exploitation générales et il est régulé par l'intermédiaire de la sonde à oxygène en fonction de la mesure de l'excédent d'oxygène dans le gaz d'échappement.

17. Procédé selon l'une quelconque des revendications précédentes, caractérisé en ce que le carburant est admis de telle sorte que, pour améliorer la préparation du mélange dans la deuxième phase, il soit influencé par l'air qui s'écoule avec une vitesse augmentée.

18. Procédé selon la revendication 17, caractérisé en ce que le carburant est admis directement dans l'air qui s'écoule avec une vitesse augmentée.

19. Procédé selon la revendication 17, caractérisé en ce que le carburant est admis en amont de l'emplacement de l'entrave et/ou avant la fin de l'entrave.

20. Procédé selon l'une quelconque des revendications précédentes, caractérisé en ce que la détermination de l'importance, du début et de la fin de l'entrave est effectuée de telle sorte qu'au moins au début de la deuxième phase, il existe un rapport de pression surcritique entre la pression en amont de l'emplacement de l'entrave et la pression dans la chambre de combustion.
